(19) Europäisches Patentamt
European Patent Office
Office européen des brevets

(11) **EP 4 080 755 A1**

(12) **EUROPEAN PATENT APPLICATION**
published in accordance with Art. 153(4) EPC

(43) Date of publication:
**26.10.2022  Bulletin 2022/43**

(21) Application number: **20903200.2**

(22) Date of filing: **10.07.2020**

(51) International Patent Classification (IPC):
*H02P 29/00* (2016.01)    *G01D 5/244* (2006.01)
*G05B 19/404* (2006.01)   *G05D 3/12* (2006.01)

(52) Cooperative Patent Classification (CPC):
**G01D 5/244; G05B 19/404; G05D 3/12;**
**H02P 29/00**

(86) International application number:
**PCT/JP2020/026988**

(87) International publication number:
**WO 2021/124603 (24.06.2021 Gazette 2021/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.12.2019  JP 2019226086**

(71) Applicant: **HITACHI INDUSTRIAL EQUIPMENT
SYSTEMS CO., LTD.
Tokyo 101-0022 (JP)**

(72) Inventors:
• **UEI, Yusuke
  Tokyo 101-0022 (JP)**

• **KONDO, Terutomo
  Tokyo 101-0022 (JP)**
• **TAKANO, Yuuri
  Tokyo 101-0022 (JP)**
• **YANADA, Tetsuo
  Tokyo 101-0022 (JP)**
• **TAKADA, Hideto
  Tokyo 101-0022 (JP)**

(74) Representative: **MERH-IP Matias Erny Reichl
Hoffmann
Patentanwälte PartG mbB
Paul-Heyse-Strasse 29
80336 München (DE)**

(54) **MOTOR CONTROL DEVICE AND MOTOR CONTROL METHOD**

(57) A motor control device that supplies electric power to a motor is disclosed. The motor control device is provided with a storage unit to store position offset data and information of a machine origin position of the motor. The motor control device generates a command value of a position after offset by using an externally input position command and the position offset data and coverts electric power to be supplied to the motor based on the command value of a position after offset and position information that is input from an encoder. The position offset data is data in which offset positions and offset quantities have been recorded in a mapping relation. A start position of the offset positions differs from the machine origin position.

F I G. 3

| OFFSET POSITION | OFFSET PULSE |
|---|---|
| N(0) (Pstart) | Pofst[0] |
| N(1) | Pofst[1] |
| ... | |
| N(99) | Pofst[99] |
| ... | |
| N(X) (Pend) | Pofst[X] |

EP 4 080 755 A1

**Description**

Technical Field

The present invention relates to a motor control device and a motor control method. Particularly, the invention relates to a motor control device and a motor control method that control a motor by using position information from an encoder.

Background Art

Servo motors are used for, e.g., driving a robot and used in a metal processing machine, a semiconductor manufacturing device, etc. and are required to operate more freely than ordinary motors. Particularly as regards rotational speed, torque, and positioning, servo motors are required to follow a user's commands with high accuracy. Usually, a servo motor is equipped with an encoder for monitoring the motor position, and a motor control device performs the motor position control by using position information from the encoder.

However, even if the motor is controlled according to command values from a servo motor control device, positioning may differ from a position intended by a user in some cases, because of an error in assembling the encoder to the motor, resolution performance of the encoder itself, or an error in assembling a load at a farther side to the motor.

A prior-art technology for improving the positioning accuracy is found in, for example, PTL 1. In PTL 1, a system enabling position control with high accuracy with a servo motor and a servo motor control device is disclosed.

Citation List

Patent Literature

PTL 1: Japanese Patent Application Laid-Open No. 2005-292898

Summary of Invention

Technical Problem

In PTL 1, it is disclosed that, in addition to an ordinary encoder that is installed on the servo motor, an expensive high resolution encoder for absolute position measurement is used concurrently and a difference between a count of pulses measured by the encoder and a count of pulses measured by the high resolution encoder is expediently used for offsetting when position control is performed.

However, in PTL 1, offsetting is performed under the premise that values measured by the high resolution encoder are absolutely correct. Nevertheless, it is an extremely rare situation that the assembling error is completely zero in actual devices, and offsetting through the use of a high resolution encoder is not realistic. In addition, because high resolution encoders are expensive, there is a need to want to substitute another position measurement means for them. Moreover, in circumstances where servo motors are actually used, a section for which advanced position control is required does not start from a machine origin position in many cases and it is difficult to handle device operation in this situation by positioning control according to the technology of PTL 1.

Solution to Problem

To solve a problem noted above, configurations described in the claims are adopted. One example is a motor control device that supplies electric power to a motor. The motor control device is provided with a storage unit to store position offset data and information of a machine origin position of the motor. The motor control device generates a command value of a position after offset by using an externally input position command and the position offset data and coverts electric power to be supplied to the motor based on the command value of a position after offset and position information that is input from an encoder. The position offset data is data in which offset positions and offset quantities have been recorded in a mapping relation. A start position of the offset positions differs from the machine origin position.

Advantageous Effects of Invention

According to the present invention, it is possible to provide a motor control device and a motor control method that allows position control that is low cost and adaptable for usage of a device in which the motor is assembled.

Brief Description of Drawings

Figure 1 is a diagram depicting an entire configuration in Example 1 to which the present invention is applied.
Figure 2 is a diagram depicting a configuration of a motor and a load in Example 1 to which the present invention is applied.
Figure 3 is a diagram representing an example of position offset data in Example 1 to which the present invention is applied.
Figure 4 is a diagram depicting an internal configuration of a motor control device in Example 1 to which the present invention is applied.
Figure 5 is a diagram depicting a configuration of a position command generator in Example 1 to which the present invention is applied.
Figure 6 is a diagram illustrating a processing flow of the position command generator in Example 1 to which the present invention is applied.
Figure 7 is a diagram representing an example of position offset data in Example 1 to which the present invention is applied.
Figure 8 is a diagram explaining an amount of positional deviation in Example 1 to which the present invention is applied.
Figure 9 is a diagram depicting a configuration of a motor and a load in Example 2 to which the present invention is applied.
Figure 10A is a diagram depicting a configuration of a motor and a load in Example 3 to which the present invention is applied.
Figure 10B is a diagram depicting a configuration of a motor and a load in Example 3 to which the present invention is applied.

Description of Embodiments

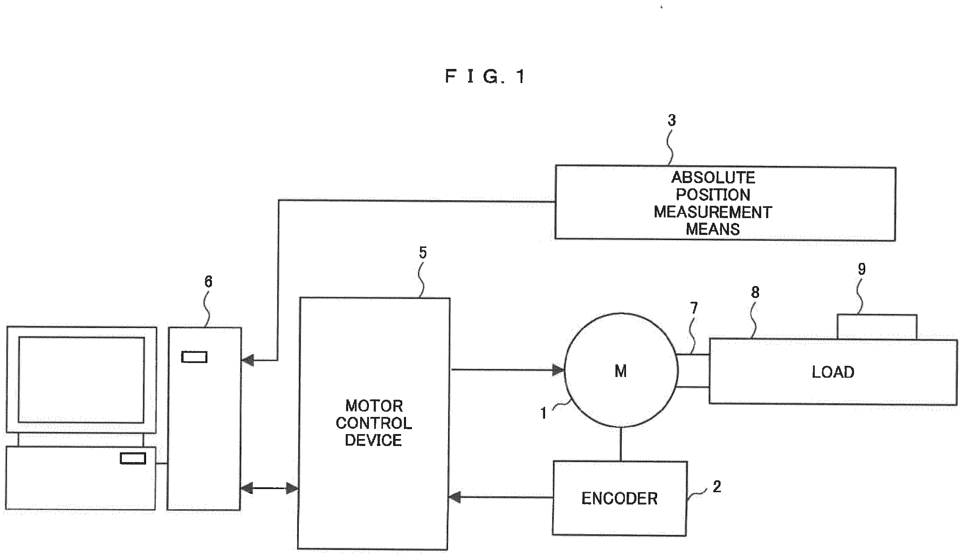

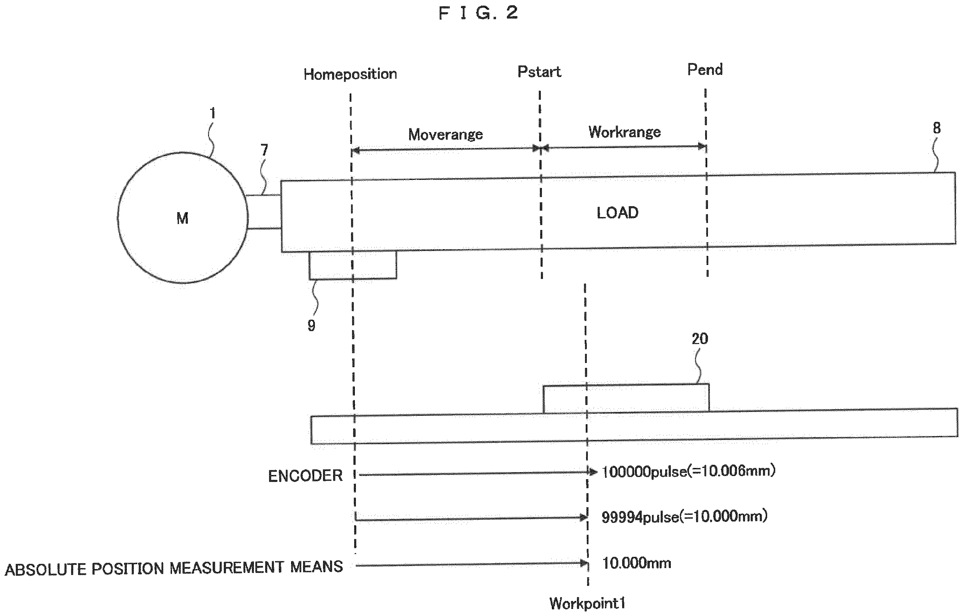

In the following, embodiments to which the present invention is applied will be described with reference to the drawings. First, a method of acquiring data that is used for position offsetting is described with Figure 1 and Figure 2.

<Example 1>

Figure 1 depicts an example of a configuration of an entire system including a servo motor control device to which the present invention is applied. The system for position offsetting is comprised of a servo motor 1 for which position measurements are to be taken, an encoder 2 that acquires rotational position information of the servo motor 1, a motor control device 5 such as a servo amplifier that controls the servo motor 1 (hereinafter simply referred to as the "motor"), an absolute position measurement means 3, an information processing device 6 such as a personal computer in which a program for measuring and processing an error between the absolute position measurement means 3 and the servo motor 1 is assumed to have been installed, a load 8 that is driven along with the rotating motion of the servo motor 1, a coupling 7 that couples the servo motor 1 with the load 8, and a working object 8 that is installed on the load 8. The absolute position measurement means 3 is, for example, a laser length measuring instrument and the load 8 is a means for transmitting the motive power of the servo motor to the working object 9, such as, e.g., a ball screw, a belt, a gear, or a chain. Note that, although the motor 1 is assumed to be a rotary motor that is taken as an example in describing it, the present invention is also applicable to a linearly driving motor that is stationary with a stator and a mover, such as a linear motor.
Figure 2 depicts an example of a configuration of a part including the motor and the load. This figure depicts the example of the configuration including a ball screw 8 that is the load assembled to the motor 1 and a base piece 9 that serves as a working object. In this configuration, the ball screw 8 assembled to the motor 1 by the coupling 7 rotates along with the rotating motion of the motor 1 so that the working object (which is assumed to be the base piece that is taken as an example in describing it) installed on the ball screw 8 will be moved to a position in alignment with a target device to work 20. The configuration like this is, for example, applied to a semiconductor manufacturing device or the like.
For instance, suppose that it is desired to move the base piece 9 by 10 mm from a machine origin position Homeposition (a home position) to a working position Workpoint (a work point) 1. If the amount of movement required for the motor 1 to move the base piece 9 by 10 mm were 100000 pulses, the base piece 9 would have moved to a position at 10 mm away from the machine origin position when the count of pulses fed back from the encoder has reached 100000, provided that all parts are assembled ideally. However, actually, if the position of the base piece 9 were at 10.006 mm, it would be necessary to offset an error of 0.006 mm. For this reason, position measurements for generating position offset data 400 are carried out by a method described below.

To begin with, a user sets a physical position of the working object 9 as the origin when the load 8 is assembled to the servo motor 1. Typically, the origin is often set at a starting end of a movable range of the load 8. The position of the rotor of the servo motor 1 corresponding to this origin is stored in the motor control device 5 as the machine origin. Specifically, the position corresponding to the origin is identified visually by the user or using a sensor and pulse information from the encoder at that point in time is stored as the machine origin position in the motor control device 5.

The motor 1 is actuated to rotate so that the working object 9 will be moved from the thus set machine origin position to an optional offsetting start position. The working object 9 is moved from the offsetting start position to any given position; at that point in time, its absolute position is measured by the absolute position measurement means 3. The information processing device 6 compares the thus measured absolute position of the working object against its position measured by the encoder 2. Data measurements are, for example, taken of a count of pulses from the encoder and an absolute position at a point when the motor actuated movement has been made by a rotation of 1° from the offsetting start position, a count of pulses and an absolute position at a point of the motor actuated movement made by a rotation of 2° from the offsetting start position, and so on. A total of X pieces of data is thus measured during the movement made from the offsetting start position to an offsetting end position X°. For each piece of the data, mismatch between the absolute position and the pulse information from the encoder is computed and stored as the position offset data 400 into the motor control device 5. These pieces of data are output, for example, as a data file in a tabular form.

At this time, the information processing device 6 generates the position offset data using pulse to distance conversion data for converting a count of pulses output from the encoder to an actual distance. The pulse to distance conversion data is, for example, data such that one pulse from the encoder actually corresponds to what micrometer. According to this data, the information processing device 6 computes a distance specified by the motor control device 5 from a count of pulses input from the encoder, measures an error by comparing such distance against the distance measured by the absolute position measurement means 3, and generates data indicating that offsetting for what number of pulses should be performed.

The offsetting start position is not necessary the same as the machine origin position. In Figure 2, for example, in a case where the base piece 9 moves to a position where it faces the target device to work 20, a section in which positioning with high accuracy is required is the section where the base piece faces the target device to work 20 within a Workrange (working range) in the figure. A Moverange (moving range) that is a section where the base piece does not face the target device to work 20 is the section that is used for movement and the positioning accuracy is not required within this range. Therefore, even though the machine origin position is Homepostion, the offsetting start position Pstart and the offsetting end position Pend should be set the same as the start and end positions of the Workrange; doing so makes it possible to create position offset data 400 only within a range as needed for the device in which the motor is assembled. In this way, by setting an optimal start position and a section to define a range in which positioning offsetting is enabled, an effective use of a limited capacity within the motor control device 5 can be made without generating position offset data 400 in a range where such data is not needed.

In addition, the interval N between data measurement points is not limited to 1°; an optional interval, e.g., 0.01° or 3° may be specified. Also, an optional range of data, e.g., up to 360° or 720° may be specified. The finer the interval between data measurement points, more accurate position offsetting can be made, whereas a huge amount of data is generated, resulting in a longer time it takes for the information processing device 6 to process the data, and a larger amount of storage capacity is required to store position offset data 400 within the motor control device 5. A user is to be able to optionally set the data interval N and the number of pieces of data X depending on the movable range of the working object 9.

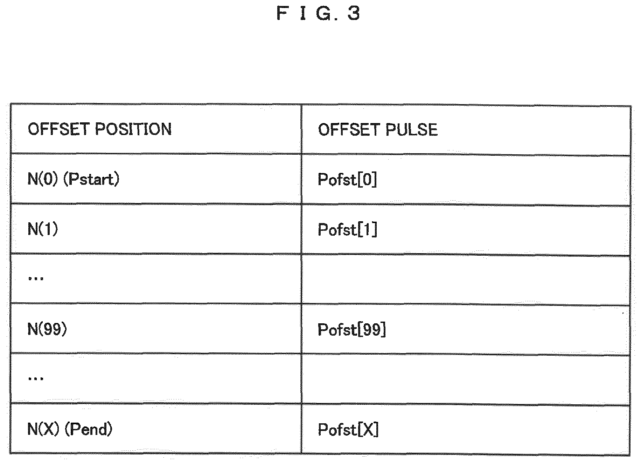

Figure 3 is an example of position offset data 400 that is stored in a tabular form. In a first column, offset positions N(x) are stored, where N(0) and N(X) correspond to the offsetting start position Pstart and the offsetting end position Pend in Figure 2, respectively. In a second column, values of an offset pulse Pofst(X) are stored; those values respectively apply to the positions stored in the first column. This position offset data is generated by the information processing device 6 and stored in a storage unit within the motor control device 5 and a position compensator 30 reads and uses this data when performing position offsetting.

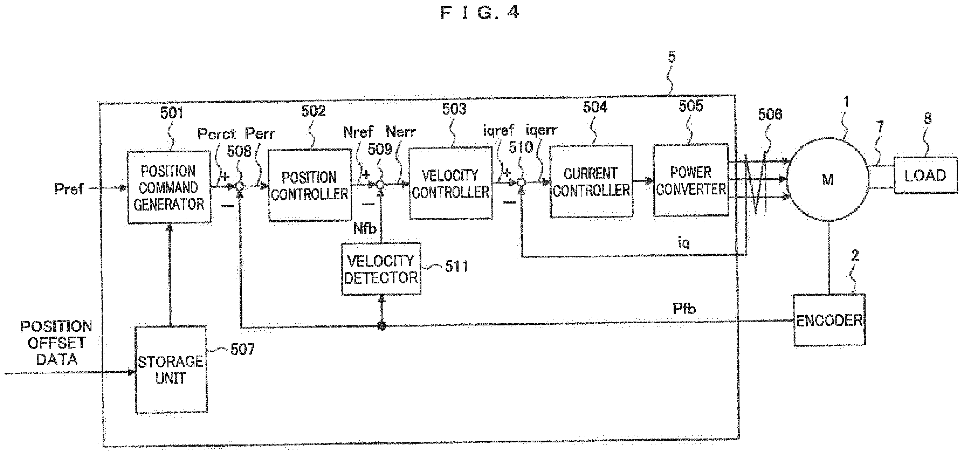

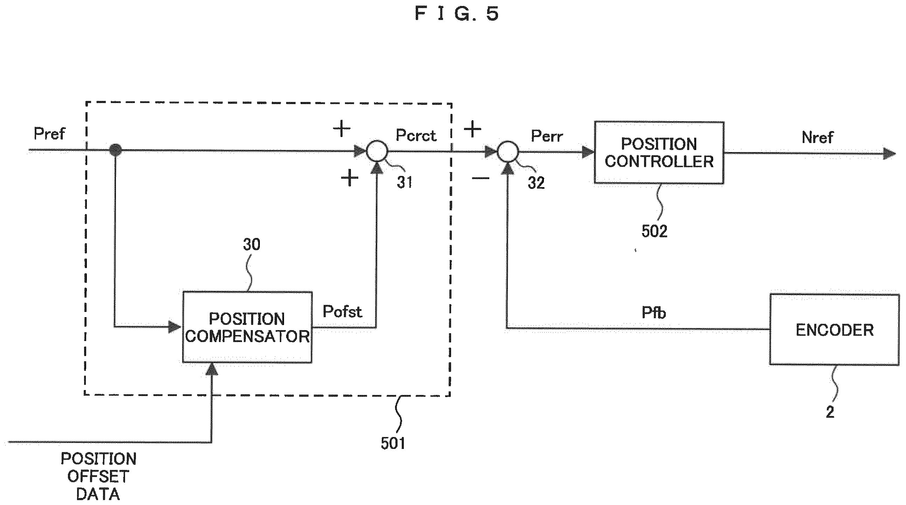

Then, a motor control method using generated position offset data 400 is described with Figure 4 and Figure 5.

Figure 4 is an overall schematic structural diagram of the motor control device 5 according to an example to which the present invention is applied. The motor 1 is comprised of a stator and a mover (not depicted), and the load 8 is a driven load that is driven by the motor 1. The motor control device 5 is a device that supplies electric power to the motor 1 and controls the motor. The motor control device 5 may be, e.g., an inverter, a servo amplifier, etc.

Electric power incoming from a power source is converted by a power converter 505 and supplied to the stator of the motor. The power converter 505 includes switching elements such as transistors. A current controller 504 controls the switching elements so that a desired current will be output from the power converter 505. The current controller 504 controls the power converter 505 by supplying a voltage to the gates of transistors constituting the power converter 505 and turning the switching elements ON/OFF.

A position command generator 501 acquires a position command Pref that is input from a higher-level motor control device (not depicted) to the motor control device 5 and offset data from a storage unit 507 in which position offset data has been prestored and outputs a command value Pcrct of a position after offset.

A subtractor 508 is the subtractor that performs subtraction between a command value Pcrct of a position after offset which is output by the position command generator 501 and a position detection value Pfb which is output by the encoder 2 mentioned above and calculates a position deviation Perr. A position controller 502 is the position controller that outputs a velocity command value Nref depending on the position deviation Perr.

A velocity detector 511 is a velocity calculator that calculates a velocity detection value Nfb of the motor 1 from the position detection value Pfb which is output by the encoder 2 and outputs the value Nfb. A subtractor 509 is the subtractor that calculates a velocity deviation Nerr between the velocity command value Nref and the velocity detection value Nfb of the servo motor 1 mentioned above. A velocity controller 503 is the velocity controller that outputs a torque current command value iqref depending on the velocity deviation Nerr.

A current detector 506 is the current detector that detects a detection value iq of the torque current that is supplied to the motor 1, and a subtractor 510 calculates a current deviation iqerr that is an amount of deviation between the torque current command value iqref and the detected value iq of the torque current that is supplied to the motor 1. The current controller 504 is the current controller that regulates the output current of the power converter mentioned above depending on the torque current deviation iqerr.

Figure 5 depicts a detailed configuration of the position command generator 501 in the present example. The position command generator 501 is internally equipped with the position compensator 30 that computes an offset pulse Pofst in relation to a position command Pref and an adder 31 that adds the offset pulse Pofst to the position command Pref.

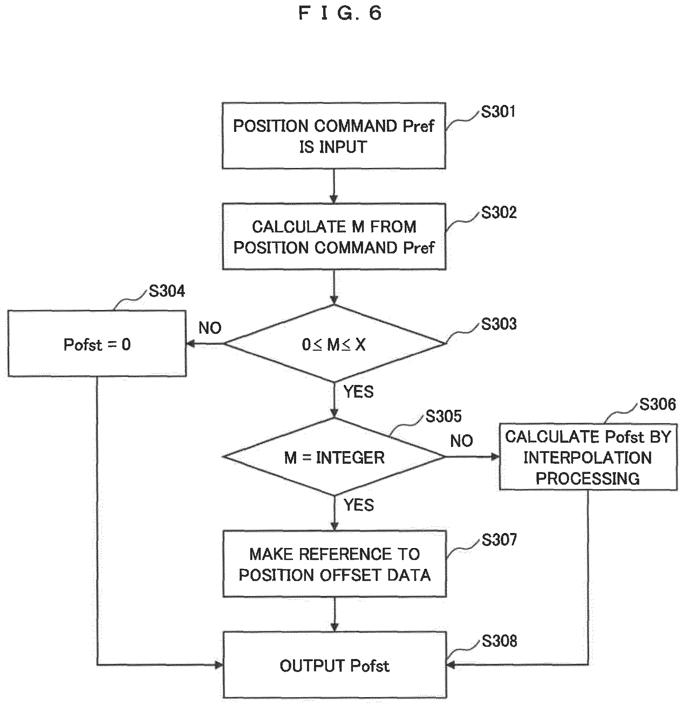

Figure 6 illustrates an example of a processing flow within the position compensator 30.

First, the position compensator 30 computes where is a target position N(M) to which the motor actuated movement will be made, as specified by the position command Pref which has been input at STEP 301, that is, which offset position N(x) the target position corresponds to (STEP 302). A distance from the offsetting start position is computed from a difference between the position command Pref and the offsetting start position Pstart, e.g., according to Mathematical Expression (1) below. The distance from the offsetting start position is divided by the data interval N; thereby, a data number M for which to compute an offset pulse can be calculated.

[Mathematical Expression 1]

$$M = \frac{(\mathrm{Pref}-\mathrm{Pstart})}{N} \qquad \text{··· Mathematical Expression (1)}$$

At STEP 303, a decision is made as to whether the target position N(M) falls within the range from the offsetting start position to the offsetting end position. In particular, a decision is made as to whether the data number M calculated by (Mathematical Expression 1) is $0 \leq M \leq X$.

If M is out of the range from the offsetting start position to the offsetting end position, the position compensator 30 outputs an offset pulse Pofst with a value of 0 and, as a result, the position command Pref without being offset is output from the position command generator 501 (STEP 304).

If M falls within the range from the offsetting start position to the offsetting end position, a decision is made as to whether the data number M is an integer (STEP 305). If the data number M in the table is an integer, the target position N(M) as specified by the position command Pref matches any one of offset positions N(x) in relation to which offset pulse quantities were stored. Therefore, offsetting is to be performed using the offset pulse Pofst [M] mapped to the offset position N(M) stored in the position offset data table.

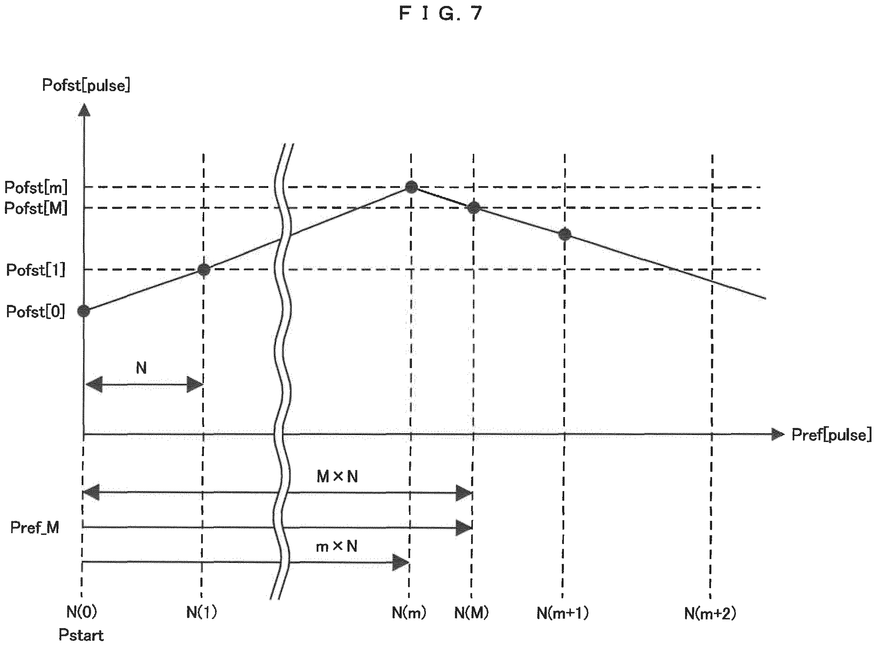

If the data number M is not an integer, the processing goes to STEP 306 and an offset pulse is calculated by a method that is described with Figure 7. Figure 7 represents a relationship between position command Pref and offset pulse Pofst. The abscissa plots position command Pref and the ordinate plots offset pulse Post. The data interval N is a value resulting from dividing the position offsetting range from the offsetting start position Pstart to the offsetting end position Pend by the number of stored offset pulse values at even intervals. Because the target position N(M) specified by the position command Pref is not an integer, it does not match any of the offset positions in relation to which offset pulse quantities were stored and it is required to perform interpolation of position offset data to calculate Pofst. As an interpolation method, for example, linear interpolation using Mathematical Expression (2) below is conceivable. At this time, processing below is performed assuming that M is m < M < m + 1 (m is an integer).

[Mathematical Expression 2]

$$Pofst = (Pofst[M + 1] - Pofst[M]) \times \frac{(Pref - (M \times N))}{N} + Pofst[M] \quad \cdots$$

Mathematical Expression (2)

Linear interpolation for the offset pulse Pofst calculates a distance of the offset position N(m) from the target position N(M) specified by the position command and performs offsetting from offset pulse Pofst[m] to offset pulse Pofst[m+1].

Specifically, a distance from the offset position N(m) to N(M) is computed by computing a difference of a value resulting from multiplying the data number M in the table by the interval N from the position command Pref. Then, the resulting distance is divided by the data interval N and the division result is multiplied by a difference value between offset pulse Pofst[m+1] and offset pulse Pofst[m]. By adding offset pulse Pofst[m] to the resultant value of the multiplication, a linearly interpolated offset pulse Pofst(M) can be calculated.

As noted above, even in a case where a position for which offset data cannot be acquired was specified by the position command Pref, position control with high accuracy will be made possible by performing interpolation using data of offset positions and offset pulses before and after the target position.

Note that, in the present embodiment, the configuration is explained such that the position command Pref is generated using the pulse to distance conversion data within a higher-level device that received a position specification form a user and input from the higher-level device to the motor control device; however, no limitation to this is intended. For instance, the configuration may be modified such that the pulse to distance conversion data is stored in the storage unit 507 and the position command is generated within the motor control device. In that case, target position information is input from the higher-level device to the motor control device 5 and the position information is converted to a count of pulses from the encoder by using the pulse to distance conversion data within the motor control device 5. In any case, when making a conversion from position information to a count of pluses from the encoder, a mismatch with position offset data is eliminated and position control can be performed with high accuracy by using the same pulse to distance conversion data as used in the information processing device 6.

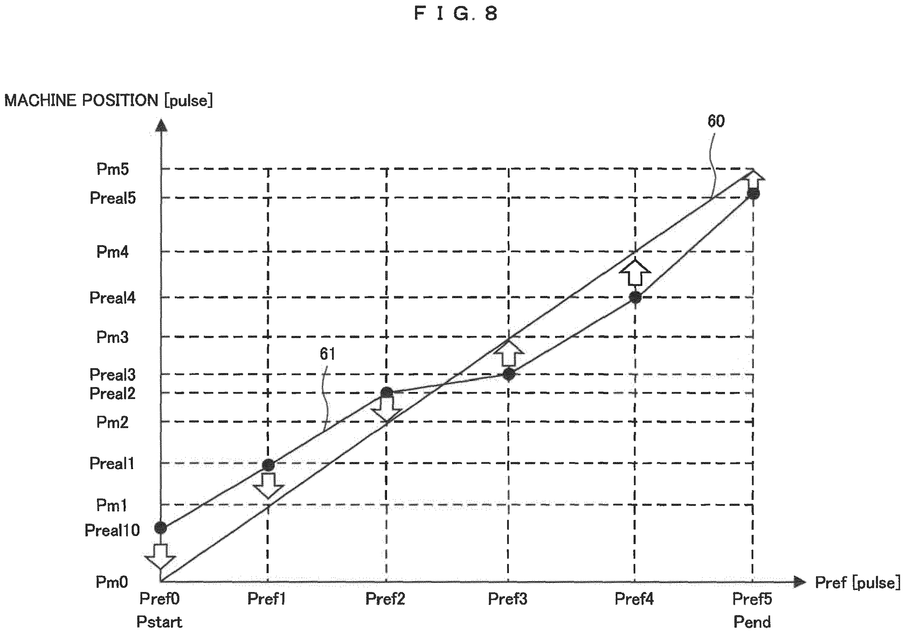

Figure 8 is a diagram representing an effect produced by the present invention. With the abscissa plotting position command values and the ordinate plotting actual machine positions of the rotor, this diagram presents an example in which positioning would be performed as indicated by an ideal positioning graph 60 if movement was made without misalignment, whereas movement is made as indicated by an actual positioning graph 61 because misalignment occurs actually.

For example, when the object has been driven and moved to a position command value Pref1 without the use of offsetting of position command values by offset pulse Pofst, an ideal machine position should be Pm1, but the rotor comes at a machine position Preal1 when actual positioning has been completed.

An error angle between the machine position Preal1 and the offset position Pm1 is an offset pulse Pofst measured in advance by a difference in measurements taken by the encoder 2 and the absolute position measurement means 3. When position control is performed based on a command value Pcrct of a position after offset obtained by adding the offset pulse Pofst to the position command Pref, the rotor comes at a machine position Pm1 when positioning has been completed. Likewise, by using offset pulse values Pofst to position command values Pref2 to Pref5 as well, positioning at ideal positions Pm2 to Pm 5 will be made possible.

As described above, by performing motor control through the use of the pulse to distance conversion data in which a count of pulses from the encoder is mapped to an actual distance and the position offset data for carrying out position offsetting, it is possible to perform position control with high accuracy by the motor control device and from encoder information without using additional special members in device operation. In addition, because an optional range can be set as a position offsetting range, not limited to including the machine origin position, the position offset data that is generated in advance can have an amount of data that is appropriate for the extent of an offsetting range and usage; this makes it possible to reduce the processing load of the motor control device.

<Example 2>

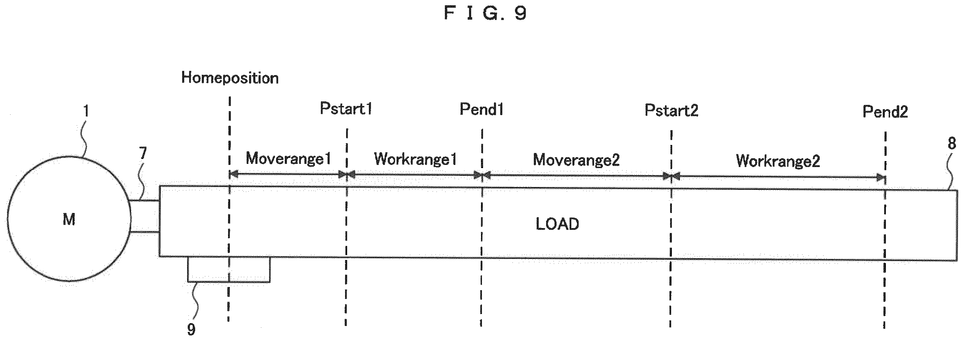

In Example 2, a plurality of ranges within which error angles are applied can be set up. Descriptions are provided below with Figure 9.

In a case where the servo motor is assembled to a load with multiple workranges as in Figure 9, measurements of position offset data for Workrange 1 are taken for offset positions N(0) to N(x), and then, measurements of position offset data for Worlrage2 are taken for offset positions N'(0) to N'(x).

As above, by setting up multiple separate sections for which position offsetting is performed, it is possible to sample detailed data within sections where such data is needed, while reducing the total amount of data, and position offsetting with high accuracy can be performed.

<Example 3>

In Example 3, descriptions are provided about position offset data when the machine origin position has been changed.

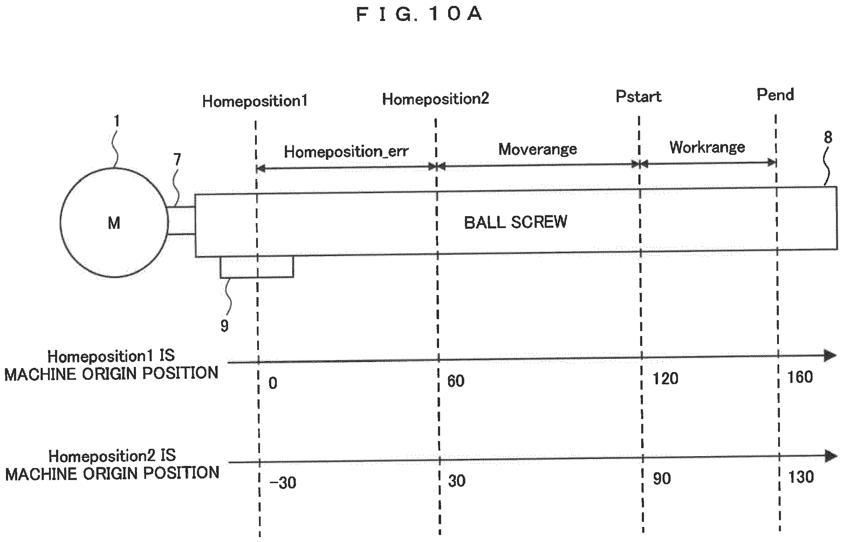

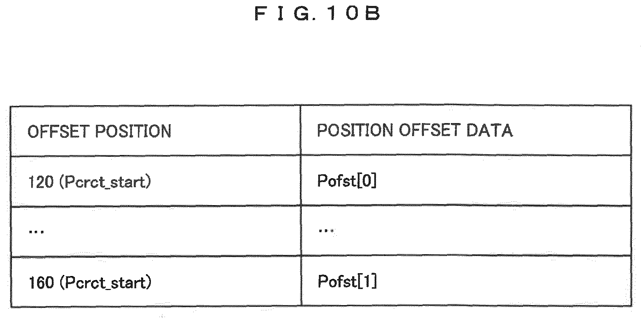

Figures 10A and 10B explain a method in which the motor control device 5 that has acquired beforehand position offset data from the information processing device 6 performs position offsetting without measuring error angles again even when the machine origin position has been changed.

Suppose that position offset data was generated to perform position offsetting in a working range Workrange from the offsetting start position Pstart to the offsetting end position Pend relative to the initial machine origin position Homeposition1.

At this time, a decision as to whether to execute position offset processing is made by deciding whether the position command Pref falls within the offsetting range from the offsetting start position Pstart to the offsetting end position Pend relative to the initial machine origin position Homeposition1, as expressed in Mathematical Expression (3) and Mathematical Expression (4). If Mathematical Expression (3) and Mathematical Expression (4) are true, position offset processing is executed.

$$\text{Pref + Homeposition1} \geq \text{Pstart} \quad \cdots \text{ Mathematical Expression (3)}$$

$$\text{Pref + Homeposition1} \leq \text{Pend} \quad \cdots \text{ Mathematical Expression (4)}$$

The offsetting start position Pstart and the offsetting end position Pend are stored as moving distances from the initial machine origin position Homeposition1. Therefore, when the machine origin position is set again and the information of the initial machine origin position Homeposition1 has been lost, it becomes impossible to perform position offset processing normally.

In the present example, storing the machine origin position at the time when position offset data was generated makes it unnecessary to re-measure data for the position offset data table even when the machine origin position is changed. The machine origin position Sethome at the time of data generation is a value that is set as in Mathematical Expression (5) each time the machine origin is set again. HomepositionA is origin return position data of the machine origin position and Homeposition_err is a distance to the initial machine origin position relative to the machine origin position.

$$\text{Sethome = HomepositionA - Homeposition\_err} \quad \cdots \text{ Mathematical Expression (5)}$$

For instance, supposing that the initial machine origin position Homeposition1 is the machine origin position and the origin position was set to 0, Homeposition1 is equal to the machine origin position at the time when position offset data was generated, and hence, the machine origin position Sethome at the time of data generation is 0.

Supposing that the machine origin position is set again at machine origin position Homeposition2 and the origin position was set to 30, the initial machine origin position Homeposition1 is at -60 relative to the machine origin position Homeposition 2, and hence, the machine origin position Sethome at the time of data generation is - 30.

Using Mathematical Expression (5), the machine origin position Sethome at the time of data generation is added to the offsetting start position Pstart and the offsetting end position Pend, respectively, as expressed in Mathematical Expression (6) and Mathematical Expression (7).

$$\text{Pref + Homeposition2} \geq \text{Pstart + Sethome} \quad \cdots \quad \text{Mathematical Expression (6)}$$

$$\text{Pref + Homeposition2} \leq \text{Pend + Sethome} \quad \cdots \quad \text{Mathematical Expression (7)}$$

For instance, supposing that the machine origin position is Homeposition2, a result is as follows: the offsetting start position Pstart = 120 - 30 = 90, the offsetting start position Pend = 160 - 30 = 120, and the machine origin position Homeposition2 = 30. Accordingly, the information of the initial origin return position is not lost even when the machine origin position is changed and it is possible to perform position offsetting normally.

A difference between the previous machine origin position Homeposition1 and the updated machine origin position Homeposition2 is computed and the updated machine origin position Homeposition2 is set up.

Pref - Homeposition

In a case where the machine origin is changed to another origin position from the servo motor control device, output is made of a difference between the machine origin position at the time when error angles were measured and the machine origin position that is set next, and the servo motor is caused to move to the machine origin by a machine origin return operation command from the servo motor control device. By this operation, the servo motor, the encoder, and a high resolution encoder for absolute position measurement are aligned in position at the origin as a mechanical absolute position.

The servo motor is caused to move to an optional offsetting start position by the servo motor control device and positioning is performed, e.g., at every one degree of rotation during movement from the offsetting start position. Each time the positioning has been performed, both positional data measured by a high resolution encoder for absolute position measurement and positional data measured by the encoder that detects the servo motor position are imported into a personal computer. Data is acquired in terms of absolute angles measured by the high resolution encoder for absolute position measurement and error angles obtained by subtracting positional data measured by the encoder from positional data measured by the high resolution encoder for absolute position measurement.

Upon acquiring the data in terms of the absolute angles of the servo motor and the error angles by performing the above-noted positioning repeatedly, the data in terms of the absolute angles and the error angles is output as a data file of a tabular form. The number of pieces of data to be output can be set optionally. Positioning is performed with respect of each of evenly divided angles measured by the high resolution encoder for absolute position measurement and error angles are acquired.

Offsetting of the servo motor measures offset positions from the machine origin. In a case where the machine origin has been changed because of mechanical change or the like, offsetting using the same offset data will be made possible by setting offset quantities from the machine origin.

<Example 4>

In Example 4, offsetting can be performed, involving making a decision as to whether to use liner curve interpolation or any other interpolation algorithm in addition to linear interpolation to interpolate offset quantities to fill an offset data gap.

Reference Signs List

1: servo motor
2: encoder
3: absolute position measurement means
5: motor control device
6: information processing device
7: coupling
8: load

9: working object
30: position compensator
400: position offset data
501: position command generator
502: position controller
503: velocity controller
504: current controller
505: power converter

**Claims**

1. A motor control device that supplies electric power to a motor,

   wherein the motor control device is provided with a storage unit to store position offset data and information of a machine origin position of the motor;
   the motor control device generates a command value of a position after offset by using an externally input position command and the position offset data and coverts electric power to be supplied to the motor based on the command value of a position after offset and position information that is input from an encoder;
   the position offset data is data in which offset positions and offset quantities have been recorded in a mapping relation; and
   a start position of the offset positions differs from the machine origin position.

2. The motor control device according to claim 1,
   wherein the motor control device identifies an offset position corresponding to the position command, computes an offset quantity according to the offset position and the position offset data, and adds the offset quantity to the position command, thereby generating the command value of a position after offset.

3. The motor control device according to claim 2,
   wherein the motor control device generates the command value of a position after offset with the offset quantity of 0, if an offset position corresponding to the position command does not exist in the position offset data's range.

4. The motor control device according to claim 2,
   wherein the motor control device computes the offset quantity using interpolation data obtained by interpolating the position offset data, if an offset position corresponding to the position command exists in the position offset data's range and matched offset position data does not exist.

5. A motor control method to be performed in a motor control device that supplies electric power to a motor, comprising:

   generating a command value of a position after offset by using an externally input position command and position offset data;
   converting electric power to be supplied to the motor based on the command value of a position after offset and position information that is input from an encoder; and
   recording offset positions and offset quantities in a mapping relation as the position offset data, wherein a start position of the offset positions differs from a machine origin position of the motor.

6. The motor control method according to claim 5, comprising identifying an offset position corresponding to the position command, computing an offset quantity according to the offset position and the position offset data, and adding the offset quantity to the position command, thereby generating the command value of a position after offset.

7. The motor control method according to claim 6, comprising generating the command value of a position after offset with the offset quantity of 0, if an offset position corresponding to the position command does not exist in the position offset data's range.

8. The motor control method according to claim 6, comprising computing the offset quantity using interpolation data obtained by interpolating the position offset data, if an offset position corresponding to the position command exists in the position offset data's range and matched offset position data does not exist.

F I G. 1

F I G. 2

Homeposition   Pstart   Pend

Moverange   Workrange

LOAD

M

1   7   9   8   20

ENCODER   100000pulse(=10.006mm)
99994pulse(=10.000mm)

ABSOLUTE POSITION MEASUREMENT MEANS   10.000mm

Workpoint1

F I G. 3

| OFFSET POSITION | OFFSET PULSE |
|---|---|
| N(0) (Pstart) | Pofst[0] |
| N(1) | Pofst[1] |
| ... | |
| N(99) | Pofst[99] |
| ... | |
| N(X) (Pend) | Pofst[X] |

F I G. 4

EP 4 080 755 A1

F I G. 6

```
                    ┌─────────────────────────┐  S301
                    │  POSITION COMMAND Pref   │
                    │        IS INPUT          │
                    └─────────────────────────┘
                                 │
                                 ▼
                    ┌─────────────────────────┐  S302
                    │    CALCULATE M FROM      │
                    │  POSITION COMMAND Pref   │
                    └─────────────────────────┘
                                 │
                                 ▼
  S304                        S303
┌──────────────┐    NO    ◇─────────────◇
│  Pofst = 0   │◄─────────    0 ≤ M ≤ X
└──────────────┘          ◇─────────────◇
       │                        │ YES
       │                        ▼                        S306
       │                  S305             NO   ┌──────────────────────┐
       │              ◇───────────◇──────────►  │   CALCULATE Pofst BY │
       │                M = INTEGER              │    INTERPOLATION     │
       │              ◇───────────◇              │     PROCESSING       │
       │                    │ YES                └──────────────────────┘
       │                    ▼                               │
       │         ┌─────────────────────────┐  S307          │
       │         │    MAKE REFERENCE TO     │               │
       │         │  POSITION OFFSET DATA    │               │
       │         └─────────────────────────┘               │
       │                    │                               │
       │                    ▼                  S308          │
       │         ┌─────────────────────────┐               │
       └────────►│      OUTPUT Pofst        │◄──────────────┘
                 └─────────────────────────┘
```

15

F I G. 7

F I G. 8

F I G. 9

Homeposition  Pstart1  Pend1  Pstart2  Pend2

Moverange1  Workrange1  Moverange2  Workrange2

LOAD

M

1  7  9  8

## F I G . 1 0 A

F I G. 1 0 B

| OFFSET POSITION | POSITION OFFSET DATA |
|---|---|
| 120 (Pcrct_start) | Pofst[0] |
| ... | ... |
| 160 (Pcrct_start) | Pofst[1] |

**INTERNATIONAL SEARCH REPORT**

International application No.

PCT/JP2020/026988

**A.    CLASSIFICATION OF SUBJECT MATTER**
Int. Cl. H02P29/00(2016.01)i, G01D5/244(2006.01)i, G05B19/404(2006.01)i,
G05D3/12(2006.01)i
FI: H02P29/00, G01D5/244 B, G05D3/12 305Z, G05B19/404 G
According to International Patent Classification (IPC) or to both national classification and IPC

**B.    FIELDS SEARCHED**

Minimum documentation searched (classification system followed by classification symbols)
Int. Cl. H02P29/00, G01D5/244, G05B19/404, G05D3/12

Documentation searched other than minimum documentation to the extent that such documents are included in the fields searched
Published examined utility model applications of Japan      1922-1996
Published unexamined utility model applications of Japan    1971-2020
Registered utility model specifications of Japan            1996-2020
Published registered utility model applications of Japan    1994-2020

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| Y | JP 2005-292898 A (NIKKI DENSO KK) 20 October 2005, paragraphs [0016]-[0038], fig. 1-6 | 1-8 |
| Y | JP 4-123205 A (MATSUSHITA ELECTRIC INDUSTRIAL CO., LTD.) 23 April 1992, page 1, right column, line 3 to line 18, page 2, lower left column, line 12 to page 3, lower left column, line 11, fig. 1-3 | 1-8 |
| A | JP 2001-232585 A (CKD CORP.) 28 August 2001, entire text, all drawings | 1-8 |
| A | JP 9-5112 A (NIKON CORP.) 10 January 1997, entire text, all drawings | 1-8 |

☒  Further documents are listed in the continuation of Box C.      ☒  See patent family annex.

\*      Special categories of cited documents:
"A"    document defining the general state of the art which is not considered to be of particular relevance
"E"    earlier application or patent but published on or after the international filing date
"L"    document which may throw doubts on priority claim(s) or which is cited to establish the publication date of another citation or other special reason (as specified)
"O"    document referring to an oral disclosure, use, exhibition or other means
"P"    document published prior to the international filing date but later than the priority date claimed

"T"    later document published after the international filing date or priority date and not in conflict with the application but cited to understand the principle or theory underlying the invention
"X"    document of particular relevance; the claimed invention cannot be considered novel or cannot be considered to involve an inventive step when the document is taken alone
"Y"    document of particular relevance; the claimed invention cannot be considered to involve an inventive step when the document is combined with one or more other such documents, such combination being obvious to a person skilled in the art
"&"    document member of the same patent family

Date of the actual completion of the international search
14.09.2020

Date of mailing of the international search report
06.10.2020

Name and mailing address of the ISA/
    Japan Patent Office
    3-4-3, Kasumigaseki, Chiyoda-ku,
    Tokyo 100-8915, Japan

Authorized officer

Telephone No.

Form PCT/ISA/210 (second sheet) (January 2015)

**INTERNATIONAL SEARCH REPORT**

| International application No. |
| --- |
| PCT/JP2020/026988 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2009-284662 A (JTEKT CORP.) 03 December 2009, entire text, all drawings | 1-8 |
| A | JP 2003-140749 A (JUKI CORP.) 16 May 2003, entire text, all drawings | 1-8 |

Form PCT/ISA/210 (continuation of second sheet) (January 2015)

**INTERNATIONAL SEARCH REPORT**
Information on patent family members

| Patent Documents referred to in the Report | Publication Date | Patent Family | Publication Date |
|---|---|---|---|
| International application No. | | | |
| | | PCT/JP2020/026988 | |
| JP 2005-292898 A | 20.10.2005 | (Family: none) | |
| JP 4-123205 A | 23.04.1992 | (Family: none) | |
| JP 2001-232585 A | 28.08.2001 | (Family: none) | |
| JP 9-5112 A | 10.01.1997 | (Family: none) | |
| JP 2009-284662 A | 03.12.2009 | (Family: none) | |
| JP 2003-140749 A | 16.05.2003 | KR 10-2003-0036001 A | |

Form PCT/ISA/210 (patent family annex) (January 2015)

**EP 4 080 755 A1**

**REFERENCES CITED IN THE DESCRIPTION**

**Patent documents cited in the description**

- JP 2005292898 A